(19) Europäisches Patentamt

European Patent Office

Office européen des brevets

(11) **EP 1 121 601 B1**

(12) **EUROPÄISCHE PATENTSCHRIFT**

(45) Veröffentlichungstag und Bekanntmachung des Hinweises auf die Patenterteilung:
**18.01.2006 Patentblatt 2006/03**

(21) Anmeldenummer: **99953773.1**

(22) Anmeldetag: **12.10.1999**

(51) Int Cl.:
*G01P 3/48* (2006.01)   *G01P 3/489* (2006.01)
*H03K 5/1252* (2006.01)   *G01R 29/027* (2006.01)
*G01D 5/244* (2006.01)

(86) Internationale Anmeldenummer:
**PCT/EP1999/007622**

(87) Internationale Veröffentlichungsnummer:
**WO 2000/022441 (20.04.2000 Gazette 2000/16)**

(54) **VERFAHREN UND SCHALTUNGSANORDNUNG ZUR SIGNALVERARBEITUNG FÜR EINEN BEWEGUNGSSENSOR**

METHOD AND CIRCUIT FOR PROCESSING SIGNALS FOR A MOTION SENSOR

PROCEDE ET CIRCUIT DE TRAITEMENT DE SIGNAUX POUR UN DETECTEUR DE MOUVEMENT

(84) Benannte Vertragsstaaten:
**DE FR GB**

(30) Priorität: **14.10.1998 DE 19847326**
**26.05.1999 DE 19924113**

(43) Veröffentlichungstag der Anmeldung:
**08.08.2001 Patentblatt 2001/32**

(73) Patentinhaber: **Continental Teves AG & Co. oHG**
**60488 Frankfurt (DE)**

(72) Erfinder:
• **FEY, Wolfgang**
**D-65527 Niedernhausen (DE)**
• **ENGELMANN, Mario**
**D-61449 Steinbach/Ts. (DE)**
• **LINK, Leonhard**
**D-65719 Hofheim (DE)**

(56) Entgegenhaltungen:
EP-A- 0 343 317          WO-A-98/09173
US-A- 4 431 930          US-A- 4 962 470
US-A- 5 043 653

## Beschreibung

Die Erfindung betrifft ein Verfahren und eine Schaltungsanordnung zur Signalverarbeitung für einen aktiven Bewegungssensor, der mindestens eine erste Folge von Bewegungsinformationen enthaltenden Eingangspulsen erzeugt, insbesondere für einen aktiven Drehzahlsensor.

Aktive Bewegungssensoren, wie sie zum Beispiel aus der WO 98/09173 hervorgehen, bestehen im allgemeinen aus einem Meßwertaufnehmer mit einem magnetostatisch empfindlichen Element mit einem Permanentmagneten (Sensorelement), das magnetisch an einen eine zu erfassende Bewegung ausführenden Encoders (Meßwertgeber) gekoppelt ist. Das Sensorelement spricht dabei auf eine durch diese Bewegung hervorgerufene Änderung der Flußdichte bzw. des Feldvektors an. Das Ausgangssignal des Sensorelementes wird einem Modulator zugeführt, der entweder eine periodische Sensorspannung oder einen periodischen Sensorstrom erzeugt, wobei die Frequenz durch die Bewegungsgeschwindigkeit bestimmt wird.

Ein besonderer Vorteil dieser aktiven Sensoren gegenüber den bekannten passiven Sensoren besteht darin, daß die Spannung des erzeugten Sensorsignals von dem Bewegungsverhalten und insbesondere der Bewegungsgeschwindigkeit unabhängig ist und somit Pegelanpassungen und Schutzschaltungen weitgehend überflüssig sind. Aus diesem Grunde finden aktive Bewegungssensoren steigende Verbreitung. Je nach Ausführung wird im allgemeinen eine Pulsspannung oder ein Pulsstrom erzeugt, die / der als Sensorsignal einer Signalverarbeitungseinrichtung zugeführt wird, um aufbereitet und ausgewertet und dann zum Beispiel zu einer Antriebs- oder Bremsschlupfregelung als Bewegungssignal übertragen zu werden.

Allerdings müssen hierbei auch Vorkehrungen getroffen werden, um Störungen zu vermeiden und in dem Fall, in dem doch eine Störung auftritt, sicherzustellen, daß keine den, Fahrzeugbetrieb gefährdenden Reaktionen auftreten können. In diesem Zusammenhang ist zu unterscheiden zwischen Störungen, die zu einem Totalausfall des Sensorsignals führen, und solchen Störungen, die dieses Signal in einer Weise beeinflussen, daß die beaufschlagte Regelung nicht mehr in einer dem tatsächlichen Fahrzeug-Betriebszustand angemessenen Weise reagiert. Diese letztgenannten Störungen können zum Beispiel durch Zündimpulse, ESD-Entladungen sowie andere Signale hervorgerufen werden, deren Dauer bis zu einem Drittel der Nutzsignaldauer betragen kann. Sie führen dazu, daß durch Überlagerung mit dem Sensorsignal dessen Frequenz vorübergehend verändert und fälschlicherweise dadurch von der Signalverarbeitungseinrichtung eine Änderung der Bewegungsgeschwindigkeit angezeigt wird.

Da eine Unterscheidung zwischen einer Veränderung des Sensorsignals aufgrund einer tatsächlichen Änderung des Bewegungsverhaltens und einer Veränderung aufgrund einer das Sensorsignal beeinträchtigenden Störung schwierig und aufwendig ist, wurde bisher offenbar auf Vorkehrungen zur Verhinderung einer möglichen Fehlinterpretation des Sensorsignals verzichtet.

Aus der EP-A-0 343 317 geht eine integrierende digitale Filterschaltung hervor, mit der unter anderem das Signal eines Raddrehzahlsensors hinsichtlich des Signal-/Rausch-Verhältnisses verbessert werden kann.

Der Erfindung liegt deshalb die Aufgabe zugrunde, eine neuartige Schaltungsanordnung zur Signalverarbeitung für einen aktiven Bewegungssensor der eingangs genannten Art zu schaffen, mit dem / der die Auswirkungen von Störungen, die nur vorübergehend und in einer Weise auftreten, die zu einer Fehlinterpretation des Sensorsignals führen können, im wesentlichen verhinderbar sind.

Gelöst wird diese Aufgabe durch die Sensoranordnung gemäß Anspruch 1.

Die Lösung hat den Vorteil, daß Störungen, die kürzer sind als die Verzögerungszeit, diese nur geringfügig verlängern und als geringe Geschwindigkeitsänderung innerhalb eines tolerierbaren Bereiches eingestuft werden können. Nur solche Störungen, die länger andauern, als die durch die Integration bewirkte Verzögerung, können einen Fehler verursachen, der allerdings erst mit dieser zeitlichen Verzögerung auftritt.

Die integrierende Filterschaltung ist ein analoges Filter mit einem Kondensator und mindestens einer Stromquelle, die zur Aufladung des Kondensators und zur Erzeugung des integrierten Signals mit dem Eingangspuls beaufschlagbar ist, wobei der erste und der zweite Schwellwert jeweils durch einen vorgegebenen, an dem Kondensator abfallenden Spannungswert bestimmt ist.

Weitere Einzelheiten, Merkmale und Vorteile ergeben sich aus der folgenden Beschreibung von bevorzugten Ausführungsformen anhand der Zeichnungen. Es zeigen:

Fig.1      ein Prinzip-Blockschaltbild einer Sensoranordnung mit Signalverarbeitungseinrichtung für aktive Bewegungssensoren;

Fig. 2      eine erste Filterschaltung;

Fig. 3      verschiedene Signalverläufe in der ersten Filter schaltung

Fig. 4      eine zweite Filterschaltung; und

Fig. 5      verschiedene Signalverläufe in der zweiten Filterschaltung.

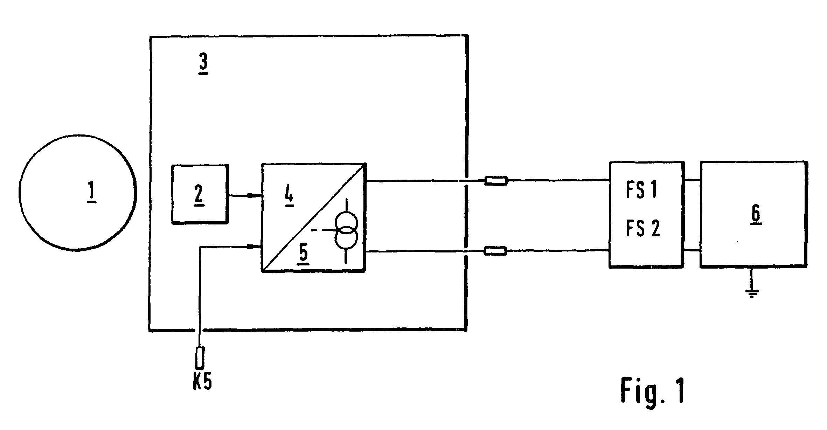

Figur 1 zeigt ein allgemeines Prinzip-Blockschaltbild einer Sensoranordnung mit einer Schaltungsanordnung zur Signalverarbeitung für aktive Bewegungssensoren. Im dargestellten Fall ist ein Encoder 1 vorgesehen, der eine zu erfassende Drehbewegung ausführt und über eine Änderung der Flußdichte bzw. des Feldvektors ein Sensorelement 2 beaufschlagt. Das Sensorelement ist ein Teil einer zu einem Sensormodul 3 zusammengefaßten Baugruppe, die einen Modulator 4 und eine Stromquelle 5 aufweist. Der Modulator 4 steuert in Abhängigkeit von dem Ausgangssignal des Sensorelementes 2 sowie einem optionalen, über einen zusätzlichen Anschluß K5 zugeführten Datensignal die Stromquelle, so daß eine erste Folge von Bewegungsinformationen enthaltenden Eingangspulsen und eine zweite Folge von Zusatzinformationen enthaltenden Eingangspulsen erzeugt wird. Es handelt sich somit um einen sogenannten 3-Level-Sensor, mit dem im Gegensatz zu den 2-Level-Sensoren neben den Bewegungsinformationen auch Zusatzinformationen (Daten) übertragen werden können. Diese beiden Pulsfolgen werden zur Störunterdrückung einer ersten und einer zweiten Filterschaltung FS1, FS2 zugeführt, deren Ausgangspulse in der Signalverarbeitungseinrichtung 6 weiter verarbeitet werden.

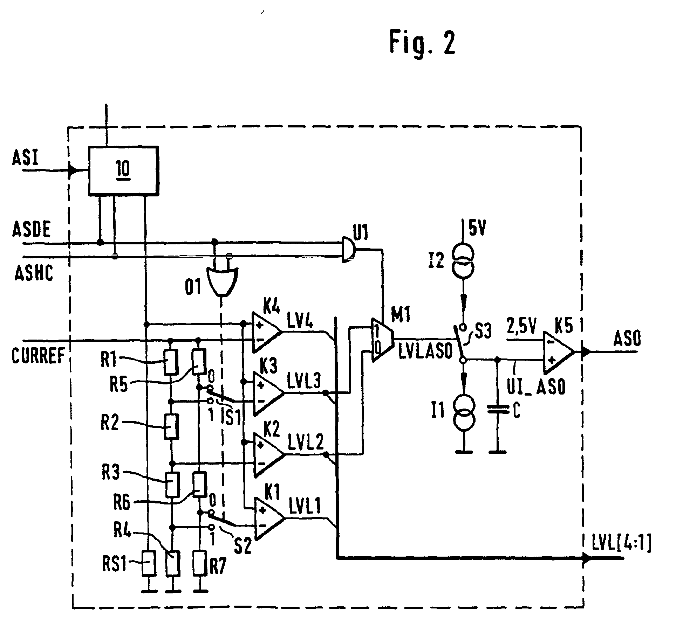

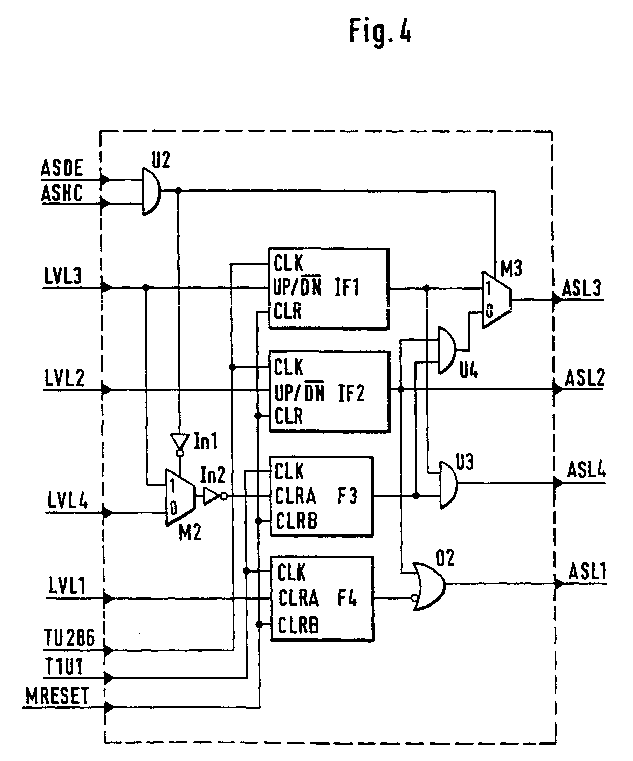

Zur Unterdrückung der eingangs genannten Art von Störungen werden nachfolgend mit Bezug auf die Figuren 2 und 4 die erste bzw. zweite Filterschaltung FS1, FS2 beschrieben. Im Hinblick auf die Auswahl der Filterschaltung ist zwischen einer Störung des Bewegungssignals und einer Störung des Datensignals zu unterscheiden. Da das Bewegungssignal zum Beispiel zur Berechnung eines dynamischen Fahrzeugzustands herangezogen wird, muß es besonders störsicher gefiltert werden. Zu diesem Zweck bietet sich die erste Filterschaltung gemäß Figur 2 mit einem integrierten Analogfilter an, da dieses eine weitgehend konstanter Verzögerung und Jitterfreiheit aufweist.

Die Datensignale sind im allgemeinen nicht in gleichem Maße für die Fahrdynamik relevant, so daß hierfür mehr Fehler toleriert werden können. Aus diesem Grund ist im allgemeinen die Anwendung der in Figur 4 dargestellten zweiten Filterschaltung mit einem integrierten Digitalfilter und digitalen Verzögerungsgliedern ausreichend.

Figur 2 zeigt die erste Filterschaltung, die auch eine Schaltungseinheit zur Umwandlung und Aufteilung der verschiedenen Strompegel des Sensorsignals in Spannungspegel umfaßt. Es können sowohl 2-Level-, als auch 3-Level-Sensorsignale angelegt werden. Die Filterschaltung weist einen ersten Eingang ASI für das Sensor-Stromsignal auf, der mit einem Schaltungteil 10 zur Strombegrenzung und konfigurierbaren. Stromspiegelung verbunden ist. Über einen zweiten und einen dritten Steuersignal-Eingang ASDE, ASHC, die ebenfalls mit dem Schaltungsteil 10 verbunden sind, ist der Spiegelfaktor, der das Verhältnis zwischen dem Eingangsstrom und dem Ausgangsstrom des Schaltungsteils 10 bestimmt, einstellbar, so daß eine Anpassung der Filterschaltung an verschiedene Sensoren mit unterschiedlichen Stromhöhen und somit eine Normierung des Sensorstroms möglich ist.

Zur Spiegelung des Sensorstroms ist der Ausgang des Schaltungsteils 10 über einen Shuntwiderstand RS1 nach Masse geführt, an dem eine entsprechende Sensorspannung abfällt. In dem Fall, in dem das Sensormodul 3 beziehungsweise der Modulator 4 anstelle des Sensorstroms eine geeignete Sensorspannung erzeugt, ist die Stromspiegelung natürlich überflüssig.

Zur Auswertung der in Spannungspegel umgewandelten Strompegel liegt die Sensorspannung an den nichtinvertierenden Eingängen eines ersten bis vierten Komparators K1, K2, K3, K4 an. In einen vierten Eingang CURREF der Filterschaltung wird ein Referenzstrom eingespeist, wobei zwischen diesem Eingang und Masse eine erste Reihenschaltung aus einem ersten bis vierten Widerstand R1, R2, R3, R4 sowie eine dazu parallelgeschaltete zweite Reihenschaltung aus einem fünften bis siebten Widerstand R5, R6, R7 liegt.

Der vierte Eingang CURREF ist ferner mit einem invertierenden Eingang des vierten Komparators K4 verbunden. Ein invertierender Eingang des dritten Komparators K3 ist über einen ersten Umschalter S1 wahlweise mit einem ersten Abgriff zwischen dem ersten und dem zweiten Widerstand R1, R2 oder einem zweiten Abgriff zwischen dem fünften und dem sechsten Widerstand R5, R6 verbindbar. Ein invertierender Eingang des zweiten Komparators K2 ist mit einem dritten Abgriff zwischen dem zweiten und dem dritten Widerstand R2, R3 verbunden. Ein invertierender Eingang des ersten Komparators K1 ist schließlich über einen zweiten Umschalter S2 wahlweise mit einem vierten Abgriff zwischen dem dritten und dem vierten Widerstand R3, R4 oder einem fünften Abgriff zwischen dem sechsten und dem siebten Widerstand R6, R7 verbindbar. Die Umschalter S1, S2 werden über den Ausgang eines ersten ODER-Gliedes O1 betätigt, dessen Eingänge mit dem zweiten bzw. dritten Eingangsanschluß ASDE, ASHC der Filterschaltung verbunden sind.

Mit dieser Schaltungseinheit wird das an dem ersten Eingang ASI anliegende Sensorsignal in fünf verschiedene Strom- beziehungsweise Spannungspegel eingeordnet. Diese Pegel entsprechen folgenden Zuständen:

    a) zu niedriger Sensor-Versorgungsstrom (wenn kein Sensor angeschlossen oder dieser defekt ist),
    b) Sensorruhestrom im Sollbereich,
    c) Datensignal auf hohem Pegel (nur bei 3-Level-Sensoren),
    d) Bewegungssignal auf hohem Pegel,
    e) zu hoher Sensor-Versorgungsstrom (wenn am Eingang ein Kurzschluß nach Masse vorhanden oder der Sensor defekt ist).

Die Vergleichsspannungen werden mit Hilfe des an dem vierten Eingang CURREF anliegenden Referenzstroms und der beiden Widerstands-Reihenschaltungen erzeugt und sind - mit Ausnahme des Falls, bei dem an dem zweiten und dritten Eingang ASDE, ASHC niedriges Potential anliegt und die Umschalter S1, S2 zur Umschaltung zwischen zwei Spannungsschwellen beaufschlagt werden - aufgrund der Normierung des Sensorstroms für alle Sensoren konstant.

An dem jeweiligen Ausgang des ersten bis vierten Komparators K1 bis K4 liegt in Abhängigkeit von dem momentanen Sensor-Spannungspegel ein erstes bis viertes Ausgangssignal LVL1 bis LVL4 an. Diese Signale werden zur Filterung des Datensignals der zweiten Filterschaltung (Ausgang LVL[4:1]) zugeführt. Zur Filterung des Bewegungssignals werden die Ausgangssignale LVL2 und LVL3 des zweiten bzw. dritten Komparators K2, K3 einem ersten Multiplexer M1 zugeführt. Zur Steuerung dieses Multiplexers ist ein erstes UND-Glied U1 vorgesehen, an dessen Eingängen der zweite und dritte Steuersignal-Eingang ASDE, ASHC anliegen und dessen Ausgang mit einem Steuereingang des ersten Multiplexers M1 verbunden ist.

Der erste Multiplexer M1 wird so angesteuert, daß im Falle eines 2-Level-Sensors das Ausgangssignal LVL2 des zweiten Komparators K2 und im Falle eines 3-Level-Sensors das Ausgangssignal LVL3 des dritten Komparators K3 als Komparatorsignal LVLASO durchgeschaltet und einem Steueranschluß eines Analogschalter S3 zugeführt wird. Die dargestellte erste Filterschaltung ist für einen 3-Level-Sensor ausgelegt, da hierbei das Bewegungssignal zugunsten der Übertragung der Datensignale verkürzt werden muß. Der Analogschalter S3 wird somit in dem Maße, wie das Bewegungssignal die durch den in den vierten Eingang CURREF eingespeisten Referenzstrom erzeugte Schwelle erreicht, geöffnet und geschlossen.

Durch das Schließen und Öffnen des Analogschalters S3 werden eine erste und eine dazu in Reihe geschaltete zweite Stromquelle I1, I2 miteinander verbunden, die zwischen eine positive Versorgungsspannung (5V) und Masse geschaltet sind. Parallel zu der ersten Stromquelle I1 ist ein Kondensator C geschaltet, der somit ständig mit einem konstanten Strom aufgeladen wird. Durch Schließen des Analogschalters S3 fließt ein zusätzlicher Strom (etwa 2 * I1), so daß ein im wesentlichen linear ansteigender bzw. abfallender Verlauf der Spannung UI_ASO an dem Kondensator erzielt wird. Die Kondensatorspannung wird einem nichtinvertierenden Eingangsanschluß eines fünften Komparators K5 zugeführt. An einem invertierenden Eingang des fünften Komparators K5, der eine Hysterese $U_{th}$ aufweist, liegt eine konstante Spannung von etwa 2,5V an. Der Ausgang des fünften Komparators K5 ist mit einem Ausgangsanschluß ASO der ersten Filterschaltung verbunden, an dem das verzögerte Bewegungssensor-Pulssignal ASL3 anliegt.

Für die Funktion der ersten Filterschaltung ist es wichtig, daß das Bewegungssignal (Radpuls) den Kondensator C immer bis zur Begrenzung aufladen kann. Hierbei sind alle Toleranzen der Sensor-Pulsbreite, von Streuungen des Kapazitätswertes des Kondensators C und Abweichungen der Ströme der ersten und zweiten Stromquelle I1, I2 zu berücksichtigen. Die Hysterese des fünften Komparators K5 wird dabei möglichst groß gewählt, da sie direkt in die Störunterdrükkung eingeht. Ferner wird gefordert, daß die Verzögerung des Analogschalters S3 beim Öffnen und Schließen gegenüber der analogen Verzögerung vernachlässigbar ist. Die Verzögerung des fünften Komparators K5 spielt dagegen keine Rolle, solange dessen Verzögerungzeit kleiner ist als die Sensorsignal-Pulsdauer.

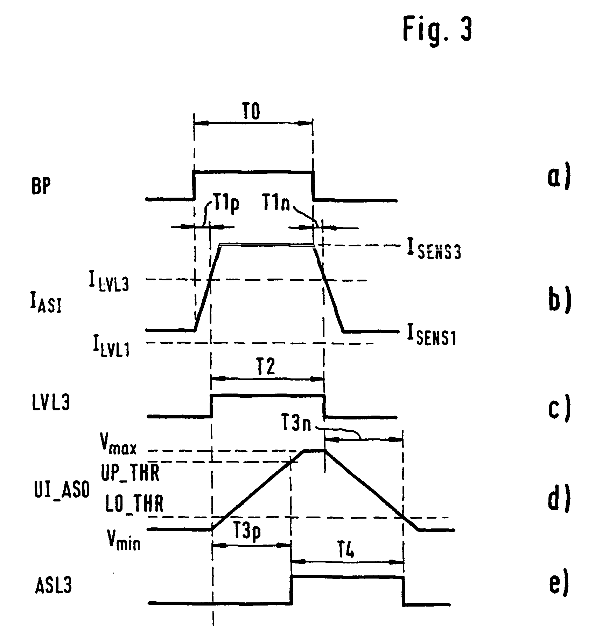

Die Funktion der ersten Filterschaltung soll nachfolgend anhand der in Figur 3 gezeigten Spannungs- und Stromverläufe erläutert werden. Durch eine Bewegung des Encoders 1 wird in dem Sensor eine Sensor-Pulsspannung BP (Bewegungssignal) erzeugt, deren Pulse nach entsprechender Aufbereitung gemäß Fig. 3a im wesentlichen rechteckig sind und eine im wesentlichen konstante Pulsdauer T0 aufweisen. Der von dem Modulator 4 erzeugte Sensorstrom $I_{ASI}$ ist in Figur 3b gezeigt. Mit einer ansteigenden Flanke des Sensor-Pulses BP steigt dieser Strom von einem ersten Wert $I_{SENS1}$, der geringfügig über der ersten Stromschwelle $I_{LVL1}$ liegt, im wesentlichen linear bis auf einen dritten Wert $I_{SENS3}$ an. Mit dem Erreichen der dritten Stromschwelle $I_{LVL3}$ nach Ablauf einer ersten Zeitdauer T1p schaltet der Ausgang LVL3 des dritten Komparators K3 gemäß Figur 3c auf hohen Pegel, so daß der Analogschalter S3 geschlossen und der Kondensator C aufgeladen wird.

Der Verlauf der Spannung UI_ASO am Kondensator C und damit auch an dem nichtinvertierenden Eingang des fünften Komparators K5 ist in Figur 3d dargestellt. Diese Spannung steigt von einem Minimalwert Vmin unterhalb eines unteren Schwellwertes LO_THR im wesentlichen linear bis zu einem Maximalwert Vmax an, der durch die Versorgungsspannung von 5V gebildet wird und oberhalb eines oberen Schwellwertes UP_THR liegt. Wenn die Spannung UI_ASO den oberen Schwellwert UP_THR = 2,5V + $U_{TH}$ / 2 nach Ablauf einer zweiten Zeitdauer T3p erreicht, wird die Ausgangsspannung ASL3 des fünften Komparators K5 am Ausgang ASO gemäß Figur 3e auf hohen Pegel gesetzt.

Sobald die Sensor-Pulsspannung BP gemäß Figur 3a nach Ablauf der Pulsdauer T0 wieder auf niedrigen Pegel abfällt, sinkt auch der Sensorstrom $I_{ASI}$ gemäß Figur 3b im wesentlichen linear wieder auf seinen ursprünglichen ersten Wert $I_{SENS1}$ ab. Mit dem Erreichen der dritten Stromschwelle $I_{LVL3}$ nach Ablauf einer dritten Zeitdauer T1n wird der hohe Pegel (mit vierter Zeitdauer T2) des Ausgangssignals LVL3 des dritten Komparators K3 gemäß Figur 3c wieder auf niedrigen Pegel zurückgesetzt. Dadurch wird der Analogschalter S3 wieder geöffnet, so daß die Kondensatorspannung UI_ASO gemäß Figur 3d von ihrem Maximalwert Vmax im wesentlichen linear wieder auf ihren ursprünglichen Minimalwert Vmin abfällt. Mit dem Erreichen des unteren Schwellwertes LO_THR = 2,5V - $U_{TH}$ / 2 nach Ablauf einer fünften Zeitdauer T3n wird der hohe Pegel (mit sechster Zeitdauer T4) des Ausgangs ASL3 des fünften Komparators K5 gemäß Figur 3e wieder auf niedrigen Pegel zurückgesetzt.

Mit der ersten Filterschaltung wird somit eine Integration des Sensorstroms $I_{ASI}$ vorgenommen. Der am Ausgang der Filterschaltung anliegende Wert ASL3 ändert seinen Pegel, sobald der obere bzw. der untere Schwellwert UP_THR, LO_THR des fünften Komparators K5 erreicht wird. Dies führt im störungsfreien Fall zu einer konstanten Verzögerung des Filter-Ausgangssignals ASL3 (=ASO) gegenüber dem am Eingang anliegenden Sensorsignal um die Summe aus der ersten und der zweiten Zeitdauer T1p, T3p, wobei diese Summe als erste Filterzeit und die Summe aus der dritten und fünften zeitdauer T1n, T3n entsprechend als zweite Filterzeit bezeichnet werden soll. Eine Störung der eingangs genannten Art, die dem Sensorsignal-Nutzstrom einen Fehlerstrom überlagert, führt - sofern sie kürzer ist, als die Filterzeit - nicht zu einer Änderung des Ausgangssignals ASL3 des fünften Komparators K5, sondern nur zu einer Verlängerung der Verzögerung.

Die Filterschaltung ist also so auszulegen, daß eine möglichst lange Filterzeit entsteht und die durch eine Störung verursachte Verlängerung der Filterzeit in einem tolerierbaren Bereich bleibt, das heißt daß ein angeschlossener Regler die Störung nur als eine geringe Geschwindigkeitsdifferenz interpretiert.

Die zweite und fünfte Zeitdauer T3p, T3n kann jeweils maximal so groß werden, wie die minimale Pulsdauer T0. Wenn eine Störung der genannten Art auftritt, führt dies zu einem Vorzeichenwechsel der Steigung der Kondensatorsspannung UI_ASO. Es sei zum Beispiel angenommen, daß der Sensorstrom $I_{ASI}$ den dritten Schwellwert $I_{LVL3}$ überschritten hat, die zweite Zeitdauer T3p jedoch noch nicht abgelaufen ist. Diese Störung führt dann dazu, daß die bereits integrierte Spannung UI_ASO am Kondensator C für die Zeitdauer der Störung abintegriert wird. Damit das Ausgangssignal trotzdem korrekt geschaltet wird, muß diese Abintegration nach Wegfall der Störung wieder rückgängig gemacht werden. Dies dauert genauso lange, wie die Störung selbst vorhanden war. Aus Figur 3 geht hervor, daß eine Störung ohne Folgen bleibt, wenn ihre Zeitdauer den Wert $T_{Stör} = 0,5 * (T2 - T3p)$ nicht überschreitet. Als besonders vorteilhafter Kompromiß hat sich dabei eine zweite und fünfte Zeitdauer T3p, T3n von 70 % der Sensor-Pulsdauer T0 erwiesen. Eine detaillierte Erläuterung hierzu folgt weiter unten.

Nachfolgend soll nun ein Berechnungsbeispiel gegeben werden:

Der kritische Fall, auf den die Filterschaltung ausgelegt werden muß, ist die kürzeste vierte Zeitdauer T2min, innerhalb der der Kondensator C bis auf die Versorgungsspannung Vmax aufgeladen sein muß. Folgende Werte seien angenommen:

Dauer eines Sensorpulses BP:
T0 = 40 bis 60 $\mu$s;

Erste bis vierte Stromschwellen:
$I_{LVL1}$ = 4,5mA, $I_{LVL2}$ = 10mA, $I_{LVL3}$ = 20mA, $I_{LVL4}$ = 38mA;

Schwellentoleranz: +/- 10%;

Erster bis dritter Sensorstrom:
$I_{SENS1}$ = 7mA, $I_{SENS2}$ = 14mA, $I_{SENS3}$ = 28mA;

Sensortoleranz: -16% bis + 20%;

Kondensatortoleranz: $C_{Tol}$ = +/- 30%;

Hysterese: $U_{Hyst}$ = 2V;

Stromanstiegsgeschwindigkeit des Sensors:

$$SR_I = 6 - 14mA/\mu s;$$

Minimale vierte Zeitdauer

$$T2min = T0min + T1nmin - T1pmax;$$

Maximale Verzögerung der ersten Zeitdauer T1p, bis der dritte Komparator K3 seinen Ausgang LVL3 auf hohen Pegel schaltet:

$$T1pmmax = (I_{LVL3}max - I_{SENS1}min) / SR_Imin$$

$$T1pmax = (22mA - 5,88mA) / 6mA/\mu s$$

$$T1pmax = 2,69 \ \mu s;$$

Minimaleverzögerung der dritten Zeitdauer T1n, bis der dritte Komparator K3 seinen Ausgang LVL3 auf niedrigen Pegel schaltet:

$$T1nmin = (I_{SENS3}min - I_{LVL3}max) / SR_Imax$$

$$T1nmin = (23,52mA - 22mA) / 14mA/\mu s$$

$$T1nmin = 0,11 \ \mu s;$$

Minimale vierte Zeitdauer T2min, innerhalb der der Kondensator spätestens aufgeladen sein soll, um eine gleiche Verzögerung von steigender zu fallender Flanke der Kondensatorspannung zu gewährleisten:

$$T2min = (40 + 0,11 - 2,69) \ \mu s$$

$$T2min = 37,42 \ \mu s;$$

Aufladung des Kondensators:

$$UI\_ASO = (I1 * t) / C$$

Maximaler Kapazitätswert des Kondensators, bei dem die Kondensatorspannung bei minimaler Sensor-Pulsbereite noch in die Begrenzung geht:

$$Cmax = (I1 * T2min) / (Vmax - Vmin)$$

$$Cmax = C * (1 + C_{Tol})$$

$$C = (I1 * T2min)/(Vmax - Vmin) / (1 + C_{Tol})$$

Ermittlung der maximal unterdrückbaren Störung:

Eine Störung führt zu einer Vorzeichenänderung der Integration. Im oben betrachteten Fall bedeutet dies, daß der Endwert nicht erreicht wird. Dieser Fall ist für den Sensor-Puls besonders kritisch, da dieser kürzer ist, als der Puls, mit dem Daten übertragen werden. Die Auslegung muß deshalb so erfolgen, daß die Umschaltschwelle niedriger liegt, als die Begrenzung und somit auch bei einer Störung eine Umschaltung erfolgt.

Die maximal unterdrückbare Störung errechnet sich wie folgt:

$$T_{Stör}max = 0,5 * (T2min - T3p)$$

$$T3p = (UP\_THR - Vmin) * C * (1 + C_{Tol}) / I1$$

$T_{Stör}max$ sollte bei etwa 15% von T2min liegen. Dies bedeutet für den Wert UP_THR:

$$UP\_THR = 0,7 * (Vmax - Vmin).$$

Für den Wert von LO_THR ergibt sich analog:

$$LO\_THR = 0,3 * (Vmax - Vmin)$$

Ermittlung der spezifizierten Parameter:

Es ist nicht ohne weiteres möglich, interne Größen innerhalb einer integrierten Schaltung zu messen. Insbesondere sind die Kapazität des Kondensators und der Stromwert von außen nicht meßbar. Da jedoch nur die Störunterdrückung an sich, das heißt die Zeit, die benötigt wird, um das Ausgangssignal ASO der Filterschaltung umzuschalten, von Interesse ist, kann folgende Messung durchgeführt werden: An den ersten Eingangsanschluß ASI wird in der Weise das am Ausgang ASO anliegende, verzögerte Sensor-Pulssignal rückgekoppelt, daß eine Oszillation zustande kommt. Diese Oszillation repräsentiert das interne Auf- und Entladen des Kondensators innerhalb der beiden Schwellen UP_THR und LO_THR und ist das Maß für die Störunterdrückung:

$$0,22 * 37 \ \mu s <\!/= T_{L\_ASO} = T_{H\_ASO} <\!/= 0,4 * 37\mu s$$

Mit einem weiteren Test wird die Verzögerung zwischen einer Änderung des Sensorstroms und der Reaktion am Ausgangsanschluß ASO der Filterschaltung gemessen. Dieser Test zeigt, ob der Ausgang auch bei dem kürzesten Radpuls richtig schaltet:

$$0,4 * 37 \ \mu s <\!/= T3p = T3n <\!/= 0,7 * 37 \ \mu s.$$

Figur 4 zeigt ein Blockschaltbild einer digitalen zweiten Filterschaltung, die insbesondere für die mit den SensorSignalen übermittelten Datensignale vorgesehen ist. Diejenige Schaltungseinheit, die den Schaltungsteil 10, den ersten bis vierten Komparator K1 bis K4, den ersten bis siebten Widerstand R1 bis R7, den ersten und zweiten Umschalter S1, S2, den Shuntwiderstand RS1 sowie das erste ODER-Glied 01 umfaßt, ist nicht dargestellt. Anstelle des ersten Eingangs ASI für das Sensorsignal sind somit vier Eingänge LVL1, LVL2, LVL3, LVL4 vorgesehen, an denen jeweils die entsprechenden Ausgänge des ersten bis vierten Komparators K1 bis K4 gemäß Figur 2 (dort die Ausgänge LVL[4:1]) anliegen. Der zweite und dritte Eingang ASDE, ASHC gemäß Figur 2 ist auch hier vorhanden.

Die zweite Filterschaltung umfaßt für jeden Sensor im wesentlichen ein erstes und ein zweites integrierendes digitales Filter IF1, IF2, sowie ein drittes und ein viertes einfaches digitales Filter F3, F4. Takteingänge CLK des ersten und zweiten Filters IF1, IF2 sind mit einem ersten Takteingang TU286 der Filterschaltung, Takteingänge CLK des dritten und vierten Filters F3, F4 sind mit einem zweiten Takteingang T1U1 der Filterschaltung verbunden. Weiterhin sind Rücksetzeingänge CLR CLRB des ersten bis vierten Filters IF1 bis F4 mit einem Rücksetzeingang MRESET der Filterschaltung verbunden.

Der zweite und der dritte Eingang ASDE, ASHC werden über ein zweites UND-Glied U2 miteinander verknüpft, wobei dessen Ausgangssignal einerseits über einen ersten Inverter In1 zu dem Steuereingang eines zweiten Multiplexers M2, sowie weiterhin zu dem Steuereingang eines dritten Multiplexers M3 geführt wird. An einem 1-Eingang des zweiten Multiplexers M2 liegt der Eingang LVL3, an einem 0-Eingang des zweiten Multiplexers M2 der Eingang LVL4 an, wobei der Ausgang des zweiten Multiplexers M2 über einen zweiten Inverter In2 mit einem Eingang CLRA des dritten Filters F3 verbunden ist. Der Eingang LVL3 der zweiten Filterschaltung ist mit dem Eingang UP/DN des ersten Filters IF1, der Eingang LVL2 mit einem Eingang UP/DN des zweiten Filters IF2 und der Eingang LVL1 mit dem Eingang CLRA des vierten Filters F4 verbunden.

Die Ausgangssignale der Filter werden zur Durchführung einer Plausibilitätskontrolle wie folgt miteinander verknüpft: der Ausgang des ersten Filters IF1 liegt an einem 1-Eingang eines dritten Multiplexers M3 sowie einem ersten Eingang eines dritten UND-Gliedes U3 an. Der Ausgang des zweiten Filters IF2 liegt an einem ersten Eingang eines vierten UND-Gliedes U4, einem ersten Eingang eines zweiten ODER-Gliedes O2 sowie an einem zweiten Ausgang ASL2 der Filterschaltung an. Der Ausgang des dritten Filters IF3 ist mit einem zweiten Eingang des dritten UND-Gliedes U3 sowie einem zweiten Eingang des vierten UND-Gliedes U4 verbunden. Der Ausgang des vierten Filters IF4 ist schließlich mit einem invertierenden zweiten Eingang des zweiten ODER-Gliedes O2 verbunden.

Der Ausgang des dritten UND-Gliedes U3 ist zu dem vierten Ausgang ASL4 der zweiten Filterschaltung geführt, während der Ausgang des zweiten ODER-Gliedes O2 mit dem ersten Ausgang ASL1 der zweiten Filterschaltung verbunden ist. Der Ausgang des vierten UND-Gliedes U4 liegt an dem 0-Eingang des dritten Multiplexers M3 an, dessen Ausgang mit dem dritten Ausgang ASL3 der Filterschaltung verbunden ist.

Mit dem dritten und dem vierten (einfachen) digitalen Filter F3, F4 wird das Datensignal um eine konstante Zeit verzögert, wobei diese Filter sofort zurückgesetzt werden, wenn eine Fehlerinformation wegfällt. Das erste und das zweite (integrierende) digitale Filter IF1, IF2 arbeitet im Prinzip wie die analoge Sensorsignal-Filterung gemäß Figur 2. Die Signale an den Eingängen LVL2, LVL3 geben die Zählrichtung der Zähler in dem ersten und dem zweiten Filter IF1, IF2 vor. In jedem Zähler ist eine obere und eine untere Anschlagbegrenzung implementiert. Sobald diese Anschläge erreicht werden, ist der betreffende Zähler für die entsprechende Zählrichtung gesperrt, und das Signal an dem betreffenden Ausgang ändert sich entsprechend der Zählrichtung.

Wegen der unterschiedlichen Filtercharakteristik der digitalen Filter ist zusätzlich die Plausibilitätskontrolle vorgesehen. Diese besagt, daß der untere Stromwert entsprechend einem Signal am ersten Ausgang ASL1 nicht unterschritten sein kann, wenn der darüber liegende Stromwert entsprechend einem Signal am zweiten Ausgang ASL2 noch überschritten wird. In entsprechender Weise gilt dies auch für die Stromwerte, die durch Ausgangssignale an dem dritten und vierten Ausgang ASL3, ASL4 repräsentiert werden.

Diese digitale zweite Filterschaltung ist insbesondere zur Filterung von Störungen auf Grund einer mangelnden elektromagnetischen Verträglichkeit (EMV) anderer Geräte vorgesehen. Für einen dadurch hervorgerufenen Über- und Unterstrom ergibt sich die untere zeitliche Begrenzung aus der Forderung, daß ein Überstrom bei einem Bewegungs-Sensorsignal erkennbar sein soll. Mit dem ersten und zweiten integrierenden digitalen Filter IF1, IF2 werden Störungen, die ein Datenprotokoll betreffen, herausgefiltert. Dabei werden für das Datenprotokoll die zweite und dritte Stromschwelle LVL2, LVL3 verwendet. Das erste und zweite Filter IF1, IF2 funktioniert in ähnlicher Weise wie die analoge erste Filterschaltung für die Bewegungs-Sensorsignale, es wird jedoch die Stromschwellen-Auswertung zur Ansteuerung eines aufwärts bzw. abwärts laufenden Zählers verwendet. Ein kritischer Fall ergibt sich in der Pause zwischen den Bewegungs- und den Datenpulsen. Dabei befinden sich die integrierenden Filter zunächst am oberen Anschlag und müssen in der Pause wieder auf Null zurückkehren können. In diese Betrachtungen gehen sowohl die analogen Werte, als auch die Toleranz der Zeitbasis ein.

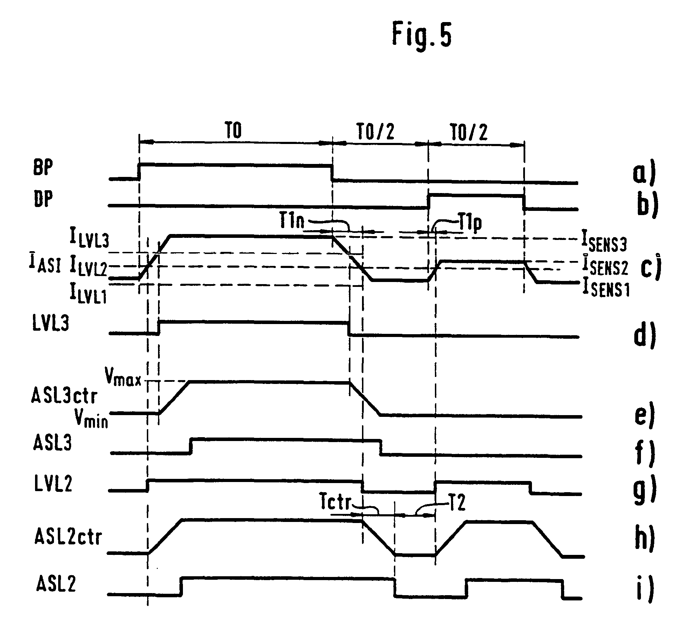

Figur 5 zeigt die verschiedenen Spannung- und Stromverläufe in der zweiten Filterschaltung gemäß Figur 4.

Durch eine Bewegung des Encoders 1 wird in dem Sensor ein Bewegungssensor-Pulsspannung erzeugt, deren aufbereitete Pulse BP gemäß Fig. 5a im wesentlichen rechteckig sind und eine im wesentlichen konstante Pulsdauer T0 aufweisen. Weiterhin soll gemäß Figur 5b ein Datensignal übertragen werden, das ebenfalls aus im wesentlichen rechteckigen Pulsen DP besteht, die mit einem Abstand von etwa T0/2 nach einem Sensor-Puls BP erzeugt werden und die eine Dauer von ebenfalls T0/2 aufweisen. Diese beiden Pulsfolgen werden dem Modulator 4 zugeführt.

Der von dem Modulator 4 erzeugte Sensor-Gesamtstrom $I_{ASI}$ ist in Figur 5c gezeigt. Mit einer ansteigenden Flanke des Sensor-Pulses BP steigt dieser Strom von einem ersten Wert $I_{SENS1}$, der geringfügig über der ersten Stromschwelle $I_{LVL1}$ liegt, im wesentlichen linear bis auf einen dritten Wert $I_{SENS3}$ an. Mit dem Erreichen der zweiten Stromschwelle $I_{LVL2}$ schaltet der Eingang LVL2 gemäß Figur 5g auf hohen Pegel, mit dem Erreichen der dritten Stromschwelle $I_{LVL3}$ schaltet der Eingang LVL3 gemäß Figur 5d auf hohen Pegel.

Nach Ablauf der Zeitdauer T0 und dem Ende des Bewegungspulses BP fällt auch der Sensorstrom $I_{ASI}$ im wesentlichen linear wieder auf seinen ersten Wert $I_{SENS1}$ ab. Mit dem Erreichen der dritten Stromschwelle $I_{LVL3}$ nimmt der Eingang LVL3 gemäß Figur 5d wieder niedriges Potential an, mit dem Erreichen der zweiten Stromschwelle $I_{LVL2}$ nach Ablauf der Zeitdauer T1n fällt auch der Eingang LVL2 gemäß Figur 5g wieder auf seinen niedrigen Pegel ab.

Mit einer ansteigenden Flanke des Datenpulses DP steigt der Sensorstrom $I_{ASI}$ von seinem ersten Wert $I_{SENS1}$ auf einen zweiten Wert $I_{SENS2}$ im wesentlichen linear an. Mit dem Erreichen der zweiten Stromschwelle $I_{LVL2}$ nach Ablauf der Zeitdauer T1p wird wiederum der zweite Eingang LVL2 gemäß Figur 5g auf hohen Pegel geschaltet. In umgekehrter Weise fällt der Sensorstrom $I_{ASI}$ mit dem Ende des Datenpulses DP nach Ablauf der Zeitdauer T0/2 wieder im wesentlichen linear auf seinen ersten Wert $I_{SENS1}$ ab, wobei mit dem Erreichen der zweiten Stromschwelle $I_{LVL2}$ der Eingang LVL2 wieder seinen niedrigen Pegel annimmt (siehe Figur 5g).

Figur 5e zeigt den Verlauf einer dritten Zählerspannung ASL3ctr, die von einem Minimalwert Vmin im wesentlichen linear bis zu einem Maximalwert Vmax ansteigt, wenn die dritte Eingangsspannung LVL3 gemäß Figur 5d das hohe Potential annimmt. In umgekehrter Weise fällt die Zählerspannung ASLctr wieder auf den Wert Vmin ab, wenn die dritte Eingangsspannung LVL3 wieder das niedrige Potential annimmt. Der entsprechende Verlauf der dritten Ausgangsspannung ASL3 ist in Figur 5f gezeigt. Diese Spannung nimmt einen hohen Pegel an, wenn die dritte Zählerspannung ASL3ctr ihren Maximalwert Vmax erreicht hat und fällt wieder auf einen niedrigen Pegel ab, wenn die Zählerspannung ASL3ctr wieder den Minimalwert Vmin annimmt.

Die Figuren 5h und 5i zeigen die Verläufe einer zweiten Zählerspannung ASL2ctr und der zweiten Ausgangsspannung ASL2 in Abhängigkeit von der zweiten Eingangsspannung LVL2. Danach steigt die zweite Zählerspannung ASL2ctr mit einer steigenden Flanke der zweiten Eingangsspannung LVL2 von ihrem Minimalwert Vmin auf ihren Maximalwert Vmax an und fällt mit einer fallenden Flanke der zweiten Eingangsspannung LVL2 innerhalb einer Zeitdauer Tctr wieder auf ihren Minimalwert Vmin ab. Wenn die zweite Zählerspannung ASL2ctr ihren Maximalwert erreicht hat, schaltet auch die zweite Ausgangsspannung ASL2 gemäß Figur 5i auf hohes Potential um. Dieses Potential wechselt wieder auf den niedrigen Wert, wenn die zweite Zählerspannung ASL2ctr wieder ihren Minimalwert erreicht hat. Nach Ablauf der Zeitdauer T2 steigt mit der steigenden Flanke der zweiten Eingangsspannung LVL2 gemäß Figur 5g auch die zweite Zählerspannung ASL2ctr wieder an. Nach Erreichen ihres Maximalwertes wird auch die zweite Ausgangsspannung ASL2 auf hohen Pegel umgeschaltet. Mit der fallenden Flanke der zweiten Eingangsspannung LVL2 fällt die zweite Zählerspannung ASL2ctr wieder ab und schaltet nach Erreichen ihres Minimalwertes auch die zweite Ausgangsspannung ASL2 wieder auf niedrigen Pegel um.

Im folgenden soll nun wieder ein Berechnungsbeispiel für die zweite Filterschaltung gegeben werden. Als Grundlage hierfür sei eine Oszillatorfrequenz f0 = 3,52 MHz und eine Oszillatortoleranz von +/- 25% angenommen.

Für eine korrekte Funktion des integrierenden ersten und zweiten Filters IF1, IF2 muß T2 > 0 bleiben:

$$\texttt{T2 = T0/2 + T1p - T1n - Tctr > 0}$$

Um eine möglichst große Unempfindlichkeit gegen Störungen zu schaffen, sollte die Filterzeit Tctr maximal werden. In diesem Fall wird T2 = 0:

T1n -> maximal,

T1p -> minimal,

T0/2 -> minimal.

$$\texttt{T1nmax = (I}_{\texttt{SENS3}}\texttt{max - I}_{\texttt{LVL2}}\texttt{min) / SR}_{\texttt{I}}\texttt{min}$$

$$\texttt{T1nmax = (33,6 mA - 9 mA) / 6 mA/}\mu\texttt{s}$$

$$\texttt{T1nmax = 4,1 }\mu\texttt{s}$$

$$\texttt{T1pmin = (I}_{\texttt{LVL2}}\texttt{min - I}_{\texttt{SENS1}}\texttt{max) / SR}_{\texttt{I}}\texttt{max}$$

$$\texttt{T1pmin = (9 mA - 8,4 mA) / 14 mA/}\mu\texttt{s}$$

$$T1pmin. = 43\ ns$$

$$Tctrmax = T0/2min + T1p - T1n$$

$$Tctrmax = (20 + 0,043 - 4,1)\ \mu s$$

$$Tctrmax = 15,86\ \mu s$$

Der Zähler wird mit der Oszillatorfrequenz getaktet, An daß sich die Zeit Tctr als Funktion des Zählerstandes N und der Taktfrequenz ausdrücken läßt:

$$Tctr = N\ /\ f0$$

$$Tctrmax = N\ /\ f0min$$

$$Nmax = Tctrmax * f0min$$

$$Nmax = 15,86\ \mu s * (3,52\ MHz * (1 - 0,25))$$

$$Nmax = 41$$

Dieser Zählerstand ist unter ungünstigen Bedingungen maximal erreichbar und gibt die maximal erzielbare Filterwirkung an. Jede Störung führt zu einer Zählrichtungsänderung des Filters, so daß dieser seinen Anschlag erst entsprechend später erreicht und somit auch seinen Ausgang entsprechend später ändert. Dies bedeutet im oben betrachteten Fall, daß schon geringe Störungen ausreichen, um einen Wechsel des Ausgangs zu verhindern. Deshalb ist ein Kompromiß zwischen der Filterwirkung und der Datenunterdrückung notwendig. Der Kompromiß ist besonders vorteilhaft, wenn der Zählerstand N zu 2/3 des oben errechneten Maximalwertes, d.h. also zu N = 24 gewählt wird.

Das digitale dritte und vierte Filter F3, F4 ist für Über- und Unterstrom auszulegen. Das Ziel besteht dabei darin, auch während eines Bewegungs-Sensorpulses einen Überstrom zu erkennen. Die minimale Zeit $T_{Iover}min$ des Überstroms errechnet sich wie folgt:

$$T_{Iover}min = T0min - (I_{LVL4}max - I_{SENS1}min)/SR_{I}min$$

$$T_{Iover}min = 40\ \mu s - (41,8\ mA - 5,88\ mA)/6\ mA/\mu s$$

$$T_{Iover}min = 34\ \mu s$$

Diese Zeit wird mit der durch vier geteilten Oszillatorfrequenz gemessen, so daß sich die Anzahl der Perioden wie folgt angeben läßt:

$$T_{Iover}min = Nmax\ /\ f0min * 4$$

$$Nmax = T_{Iover}min * f0min / 4$$

$$Nmax = 22$$

Um auch Überströme erfassen zu können, die sich erst mit einer Verzögerung gegenüber dem Beginn des Bewegungspulses einstellen, wird dieser Wert auf N =18 vermindert.

Die erfindungsgemäße Vorrichtung ist auch zur Anwendung mit einem passiven Bewegungssensor geeignet, wenn eine Schnittstelleneinrichtung vorgesehen ist, mit der die Sensorsignale, deren Amplitude im allgemeinen von der Bewegungsgeschwindigkeit abhängig ist, in entsprechende Signale mit einer bewegungsabhängigen Frequenz umgewandelt werden.

## Patentansprüche

1. Sensoranordnung mit einem aktiven Sensor, der mindestens eine erste Folge von Bewegungsinformationen enthaltenden Eingangspulsen erzeugt,
in der eine Einrichtung zur Signalverarbeitung des Sensorsignals vorhanden ist, bei der mindestens eine integrierende Filterschaltung vorgesehen ist, zur Integrierung jedes Eingangspulses einer Pulsfolge so daß das integrierte Signal während des Eingangspulses ansteigt und wenn kein Eingangspuls vorliegt abfällt, und zur Erzeugung eines zugeordneten Ausgangspulses zwischen dem Zeitpunkt, bei dem das integrierte Signal nach Überschreiten eines vorgebbaren ersten Schwellwertes über einem vorgebbaren zweiten Schwellwert liegt und zwischen dem Zeitpunkt, bei dem das integrierte Signal während des Abfalls nach Unterschreiten des zweiten Schwellenwertes unter dem ersten Schwellenwert liegt, so daß der Ausgangspuls gegenüber dem Eingangspuls eine zeitliche Verzögerung aufweist, wobei die integrierende Filterschaltung ein analoges Filter mit einem Kondensator (C) und einer ersten Stromquelle (I2) aufweist, die zur Aufladung des Kondensators (C) und zur Erzeugung des integrierten Signals mit dem Eingangspuls beaufschlagbar ist, wobei der erste und der zweite Schwellwert jeweils durch einen vorgegebenen, an dem Kondensator abfallenden Spannungswert (UP_THR, LO_THR) bestimmt ist, und in der eine weitere zweite Stromquelle vorgesehen ist, wobei zur Erzielung eines weitgehend linearen Verlaufes des integrierten Signals die zweite Stromquelle (I1) den Kondensator (C) mit einem konstanten ersten Strom vorlädt und die erste Stromquelle (12) durch den Eingangspuls beaufschlagt wird.

## Claims

1. Sensor assembly including an active sensor which generates at least one first sequence of input pulses that contain motion information, in which a device is provided for processing the sensor signal, wherein at least one integrating filter circuit is arranged for integrating each input pulse of a pulse train so that the integrated signal rises during the input pulse and drops when no input pulse prevails, and for generating an associated output pulse during the point of time where the integrated signal is in excess of a predeterminable second threshold value after a predeterminable first threshold value has been exceeded and the point of time where the integrated signal is below the first threshold value during the drop after having fallen below the second threshold value so that the output pulse has a time delay with respect to the input pulse, wherein the integrating filter circuit includes an analog filter with a capacitor (C) and a first current source (I2) to which the input pulse can be sent for charging the capacitor (C) and for generating the integrated signal, and the first and the second threshold value is in each case defined by a predetermined voltage value (UP_THR, LO_THR) which declines at the capacitor, and wherein another second current source is provided, and the second current source (I1) precharges the capacitor (C) with a constant first current and the input pulse is applied to the first current source (I2) in order to achieve a virtually linear course of the integrated signal.

## Revendications

1. Système-palpeur comportant un palpeur actif produisant des impulsions' d'entrée contenant au moins une première suite d'information de mouvement, système-palpeur étant prévu d'une installation pour traiter le signal-palpeur comportant au moins un montage-filtres intégrant pour intégrer chaque impulsion d'entrée d'une suite d'impulsion de sorte que le signal intégré en cas de présence de l'impulsion d'entrée va croître et en cas de l'absence d'une impulsion d'entrée va décroître, et pour produire une impulsion de sortie attribuée entre le moment dans lequel le signal intégré après avoir dépassé une première valeur seuil prédéterminée est supérieure d'une seconde valeur seuil prédéterminée et le moment dans lequel le signal intégré pendant le décroissement après avoir dépassé vers le bas la valeur seuil secondaire est au bas de la valeur seuil première de sorte que l'impulsion de sortie vis-à-vis l'impulsion d'entrée est retardé dans le temps, le montage-filtres intégrant comportant un filtre analogue prévu d'un condensateur (C) et d'une première source de courant (12) à laquelle est appliqué l'impulsion d'entrée pour charger le condensateur (C) et pour produire le signal intégré, la valeur seuil première et la valeur seuil secondaire chaque fois étant définies par une valeur de tension (UP_THR, LO_THR) décroissant au condensateur, et comportant une autre source de courant secondaire, la source de courant secondaire (I1) pré-chargeant le condensateur (C) avec un courant premier constant pour obtenir un relativement linéaire cours du signal intégré, et l'impulsion d'entrée étant appliqué par la source de courant (I2) première.

Fig. 1

# Fig. 2

# Fig. 3

EP 1 121 601 B1

# Fig. 4

# Fig.5